# EUROPEAN PATENT APPLICATION

(11) **EP 3 096 373 A1**
(43) Date of publication of application: **23.11.2016**
(21) Application number: 16151081.3
(22) Date of filing: 13.01.2016
(51) Int. Cl.: H01M 2/10, H01M 2/36, H01M 2/38, H01M 4/04, H01M 10/04, H01M 10/42, H01M 2/34, H01M 2/40, H01M 4/139, H01M 10/052, H01M 10/0583, H01M 10/54

(54) **LIQUID ELECTROLYTE LITHIUM ACCUMULATOR AND A METHOD OF MAKING THE SAME**

(30) Priority: 20.05.2015 CZ 20150335; 22.12.2015 CZ 20150932
(71) Applicant: Polivka, Jaroslav, 16000 Prague (CZ)
(72) Inventor: Polivka, Jaroslav, 16000 Prague (CZ)
(74) Representative: Hak, Roman

(57) **Abstract**

A liquid electrolyte lithium accumulator made up of individual modules composed of mutually electrically and hydraulically connected cells wherein each cell comprises a positive electrode /2/ and a negative electrode /3/ separated by a separator /4/ and current collectors /26, 36/ connected to accumulator poles and wherein each module /13/ is located in a housing /12/ stored in a common accumulator case /1/ with a defined interspace /8/ for an emergency medium between the housing /12/ and each module /13/ is further provided with a controlled fluid connection to an inlet and outlet of electrolyte, to the interspace /8/ and to an electrolyte drain. The interspace /8/ provided with a controlled fluid connection to a source of pressurized inert gas. The emergency medium is preferably mineral oil, and inert gas. Further disclosed is a method for producing the accumulator with a specific module.

## Description

### TECHNICAL FIELD

The invention relates to a liquid electrolyte lithium accumulator made up of individual modules composed of mutually electrically and hydraulically connected cells filled with a liquid electrolyte, wherein each cell comprises a positive electrode and a negative electrode separated by a separator and current collectors connected to accumulator poles. The invention further relates to a method of making an advantageous embodiment of the accumulator with a specific type of the module.

### BACKGROUND ART

The operation of high capacity accumulators /secondary batteries or their complexes is associated with a problem of a decreasing ratio between the capacity and consequently the weight of the accumulator and the area that is available to remove the heat generated during chemical reactions accompanying the accumulator charging and discharging process. Keeping the accumulator within an operating temperature range, which is defined by security limits, in order to exclude overheating of the accumulator, which may result in fire or explosion, or operating at higher temperatures that may be detrimental to the accumulator lifetime, requires an additional device providing enhanced heat exchange. WO2010031363 presents a lithium secondary battery comprising a bundle of superposed metal frames, wherein each frame comprises an opening in which a thick-walled, so called 3D electrode is disposed and electrodes of opposite polarity are separated by separators and frames of opposite polarity isolated from each other. Although metal frames allow better heat removal from the interior of the accumulator, they may not ensure safe heat withdrawal with large-scale electrodes and high-capacity accumulators containing a plurality of juxtaposed bundles of cells.

One possible solution for cooling bundles of battery cells offers PCT publication WO2005324563 describing a substrate or body in which groups of batteries are stored and which makes the battery system resistant to vibration, and further comprising tubes for heat exchange medium, arranged within the battery system.

EP 2619836 discloses another solution of the temperature control of a high capacity lithium accumulator with modules adapted for a cooling system, and including also a variant using a liquid electrolyte as a cooling medium.

Specifically, with high-capacity accumulators operating at a high rate of charge and discharge cycles and using as negative electrode materials such as lithium or graphite plates, a temperature control system can not eliminate local overheating or a short circuit, which could result in fire or explosion.

The conventional less costly safety measures are based on using a safety circuit, which disconnects the accumulator when the voltage exceeds the safety limits, for example 3-4.2 V per cell, or when the prescribed temperature limit is exceeded. Also used are various venting systems. Nevertheless, such systems do not provide means that could be able to liquidate a fire or eminent threat of fire at a particular source of fire or overheating as quickly as possible and simultaneously to limit to a minimum the damage caused to the accumulator parts exposed to a fire extinguishing media.

The primary object of the present invention is to solve the described technical problems by creating a lithium accumulator that meets the highest demands on safety even when operating under extreme conditions. Such condition may be inter alia given in cases where for the electrode are used materials, which are more susceptible to overheating or a short circuit.

Another object of the present invention is to provide an accumulator emergency system that could be able to liquidate a fire or eminent threat of fire with limitation to a particular fire place as quickly as possible and simultaneously to limit to a minimum the damages caused to the accumulator parts exposed to the fire extinguishing media.

Yet another object of the invention is to create a module structure that would be suitable for mass production of lithium batteries and still meet the conditions for application in high capacity rechargeable systems equipped with an emergency or cooling system and requiring rapid exchange of electrolyte. Yet another object of the invention is a method of manufacturing of such a module.

### SUMMARY OF THE INVENTION

The object of the present invention can be achieved and the described deficiencies overcome by a liquid electrolyte lithium accumulator made up of individual modules composed of mutually electrically and hydraulically connected cells wherein each cell comprises a positive electrode and a negative electrode separated by a separator and current collectors connected to accumulator poles wherein the invention comprises as essential features that each module is located in a housing stored in a common accumulator case with a defined interspace for an emergency medium between the housing and each module is further provided with a fluid connection to an inlet and outlet of electrolyte, to the interspace and to an electrolyte drain.

Hereinafter, other preferred embodiments of the present invention are described that further develop or specify in more details its essential features but without limiting the scope of the invention.

The module is provided with a fluid connection to a source of pressurized inert gas via the interspace.

The module is connected to the interspace through an inlet valve, to the electrolyte drain through an outlet valve and to the source of pressurized gas through an emergency shut-off valve and the inlet and outlet of electrolyte are connected to an electrolyte pump.

The emergency medium is selected form the group comprising mineral oil, anhydrous petroleum and inert gas or combination thereof.

The housing with the module is composed of a vertical shell closed by an upper electrolyte distributor board and a bottom electrolyte distribution board.

The individual modules have a common electrolyte distributor board and a common bottom electrolyte distribution board.

The material of the positive electrode / and the material of the negative electrode are each applied to both sides of a current collector made of a perforated metal strip in the form of metal network, expanded metal, perforated or porous metallic foil and between the positive electrode and the negative electrode a strap of an inner separator is inserted to form an accumulator cell which cell is covered by an outer separator /6/ and as a module or a part thereof is placed in the housing /in the form of folded waves, stacked on each other.

A method for producing a liquid electrolyte accumulator module according comprises steps of pressing on both sides of a first strip of the current collector a material of the positive electrode to produce the positive electrode and on both sides of a second strip of the current collector a material of the negative electrode to produce the negative electrode in the atmosphere of anhydrous air and at a temperature - 40 to -70 °C, applying a separator material on both sides of a separator carrier tape to form an inner separator strap, pressing the positive electrode on one side of the inner separator strap and the negative electrode on the other side of the inner separator strap to form a cell, covering the cell by an external separator, heating the cell to a temperature of 18 to 26 °C, molding the cell to a folded waves and gradually depositing the waves in stack in a module housing.

An advantage of the lithium accumulator provided with a safety emergency system according to the present invention is that it eliminates to a large extent the causes which may initiate fire or explosion in a very short time and effectively drowns out the accumulator cells exposed to the risk of fire or explosion. The electrolyte comprising as a standard component a hazardous organic compound is thus replaced in the module and the housing by the emergency medium.

The constructions of modules according to the invention are particularly suitable for accumulators designed for rapid exchange of the electrolyte, which is a precondition for successful function of the emergency system or refrigeration systems used in high-capacity lithium accumulators, which may be on the other hand more susceptible to overheating or a short circuit. As electrode materials can be used materials characterized by fast electro-diffusion of lithium, where one of the electrodes is for example formed by a porous sheet of lithium with pressed dendrite of lithium or dendrites of lithium and allowing increasing of the accumulator capacity up to 4.5 times. The arrangement of the emergency system with a pumping circuit also allows increasing the pressure of the electrolyte in the module, or to ensure its forced circulation and thereby significantly reduce the time of charging the accumulator. The disclosed emergency system, including its components and materials according to the invention provides the possibility to recycle all the components of the accumulator, or restore the function of the accumulator after its crash simply by washing the affected module with an appropriate solvent to remove the emergency mineral oil and to refill the electrolyte.

The method for producing a module according to the invention is particularly suitable for mass production of accumulator modules suitable to be utilized within the emergency system.

The positive electrode material may be selected from the group consisting of oxides, mixed metal oxides and phosphates of lithium, such as LTS (Li₄Ti₅O₁₂), LMS (LiMn₂O₄), lithium dendrites, etc. The material of the negative electrode may be for example a mixture of conductive carbon and graphite, vanadium oxide, etc. Any combination of the said materials in respect of the positive and the negative electrode is naturally subject to the condition of a different electric potential of the electrodes.

### BRIEF DESCRIPTION OF THE DRAWINGS

The lithium accumulator according to the invention is schematically illustrated in the accompanying drawing, in which:
Fig. 1 shows a cross-section of one module located in an accumulator case provided with the respective connections enabling the function of an emergency medium;
Fig. 2 - is another possible embodiment of the module;
Fig. 3 - shows a device for producing the module illustrated in Fig. 2.

### EXAMPLES

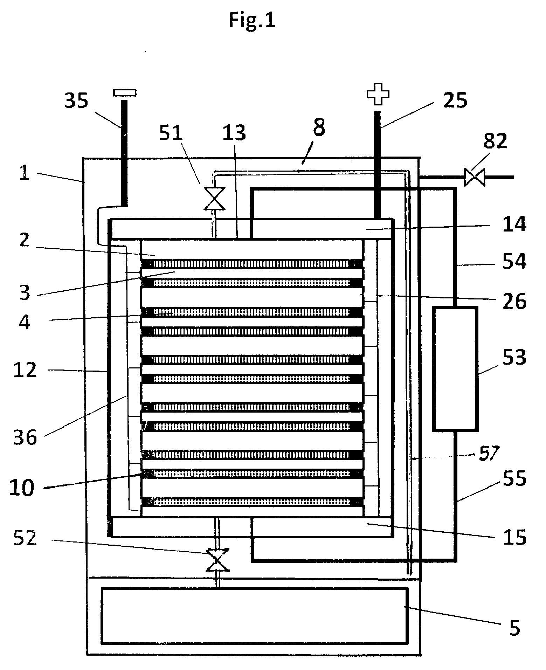

In the drawings, components of exemplary embodiments of the invention that exhibit the same function and serve the same purpose bear the same reference numerals. Fig. 1 shows a cross section view of one of a plurality of modules 13 of a lithium accumulator, which are stored in a case 1. The modules 13 may be arranged in the case 1 in one or more parallel rows leaving between the modules 13 and the case 1 an interspace 8 for emergency medium. Each module 13 may consists of one or bundle of superposed hydraulically and electrically connected cells. Each cell contains a positive electrode 2 and a negative electrode 3, which are separated by a separator 4 provided with a circumferential seal 10 and a current collector s 26 of the positive electrode 2 and a current collectors 36 of the negative electrode 3. The current collectors 26, 36 are led out of the case 1 and are connected to accumulator poles 25 and 35. The bundle of cells is clamped between an upper electrolyte distribution board 14 and a lower electrolyte distribution board 15 which together with an interposed vertical shell constitute a closed housing 12. The upper electrolyte distribution board 14 and the lower electrolyte distribution board 15 may be common to several modules 13, or for all the modules 13 from which the accumulator is assembled. The electrodes may also be located in mutually insulated frames and together with separators 4 with the seals 10 constitute a closed housing system for each module 13 without the need to use the vertical shell. One of possible embodiment of such a module may be seen in in detail in EP 2619836.

Each module 13 is further provided with a controlled fluid connection to an inlet and outlet of electrolyte, the interspace 8 and to an electrolyte drain. The liquid electrolyte, such as a solution of a lithium salt in an organic solvent, is fed into the module 13 and drawn away by an upper conduit 54 and a lower conduit 55 through the electrolyte distribution boards 14, 15. The conduits 54 and 55 are connected to a pump 53, which can work as a reverse pump, i.e. with the possibility of interchanging the supply and discharge of the electrolyte from above or from below. The circuit of the pump 53 may be completed by other devices, not shown in Fig. 1, such as electrolyte reservoir, electrolyte cooling and/or heating equipment, electrolyte filter and regenerating unit, etc. The interspace 8 for emergency medium is via a remotely controlled filling inlet valve 51 connected to the upper electrolyte distribution plate 14 and accordingly with the interior of the housing 12, by a siphon conduit 57 having an opened end situated near the bottom of the case 1. The lower electrolyte distribution plate 15 is connected via a remotely controlled outlet valve 52 to an electrolyte drain. In this embodiment, the electrolyte drain is connected to an electrolyte tank 5. Upon opening the valves 51 and 52, the connection of the interspace 8 via modules 13 with the electrolyte tank 5 is enabled. The case 1 is through the emergency shut-off valve 82 connected to a not shown external source of emergency medium, for example a pressurized inert gas tank.

In operation, the interspace 8 of the accumulator contains an emergency medium such as an emergency liquid in an amount sufficient to inundate the housing 12 of the module 13 while the remaining liquid-free portion of the interspace 8 is filled up with an emergency gas. The emergency liquid is preferably mineral oil or anhydrous petroleum and the emergency gas is an inert gas, preferably argon. Alternatively, the interspace 8 may be fully filled with the emergency liquid.

An integral part of the accumulator emergency system is a temperature monitoring system equipped with temperature sensors that produce warning signals in case of exceeding the preset temperature limits in parts of the accumulator and when the accumulator electrical circuit is broken. The sensors are connected to a control unit processing the warning signals. This part of the emergency system is not shown in Fig. 1 as its configuration is a routine component of similar security systems.

In response to the warning signals, the control unit gives an instruction not only to interrupt the accumulator electrical circuit but also to activate opening mechanism of the remote controlled inlet valve 51, the outlet valve 52 and the emergency shut-off valve 82 to enable the compressed inert gas to enter into the upper portion of the interior of the case 1 and interspace 8. The emergency liquid present in the interspace 8 is urged by the compressed inert gas to enter via the siphon conduit 57 the module 13 and to drive the electrolyte out from the cells of the module 13 into the electrolyte tank 5. This operation will largely eliminate possible causes of subsequent fire or explosion of the accumulator due to overheating.

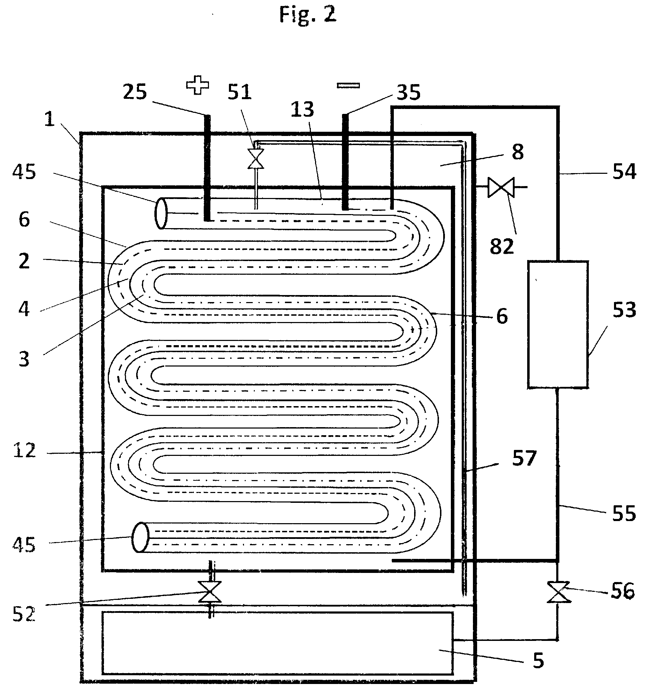

Fig. 2 represents a cross-sectional view of one of the plurality of modules 13 of a lithium accumulator, which are part of the accumulator system equipped with an emergency system. Like in Fig. 1 the modules 13 are stored in the sealed housings 12 disposed in the case 1. The housings 12 with the modules 13 are arranged in the case 1 in one or more parallel rows leaving between the modules 13 and the case 1 an interspace 8 for emergency medium.

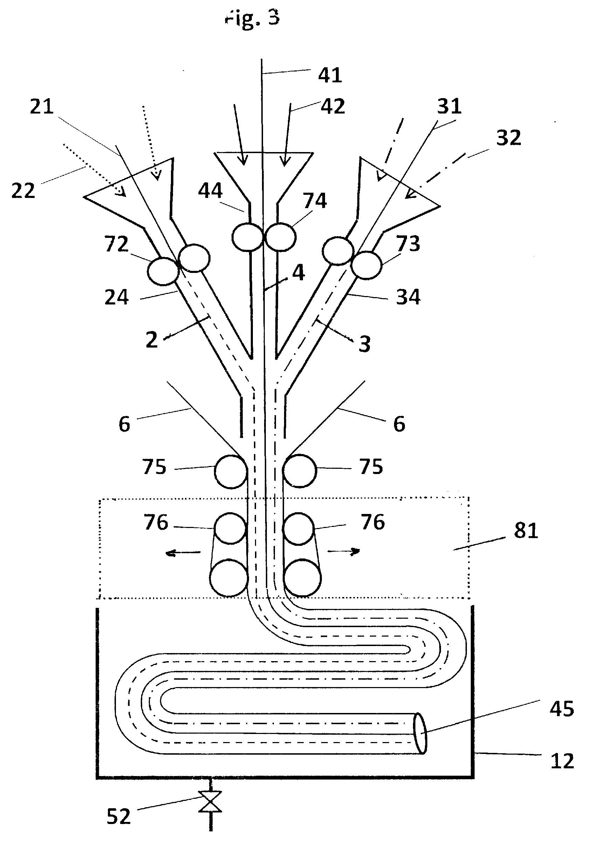

Each module 13 is composed of one or more hydraulically and electrically connected cells. Each cell contains a positive electrode 2 and a negative electrode 3 separated by an internal separator 4. Each cell is covered by a thin-walled outer separator 6. The material of the inner separator 4 is for example a polyolefin porous film or non-woven glass or ceramic fibers filled with nanoparticles ZrO2, Al2O3, or corundum and compacted into a strip with a porosity of 30 -95 %. The outer separator 6 performs a function of outside protection of the cell and may be made for example of a thin-walled, high-porous polyethylene film. The positive electrode 2 is pressed on both sides of a current collector 21 for example by means of a device shown in Fig. 3 and the negative electrode is pressed on both sides on the current collector 31 of the negative electrode, also shown in Fig. 3. The current collector 21 is connected to a positive pole 25 of the accumulator and the current collector 31 is connected to a negative pole 35 of the accumulator. Each module 13 is arranged in the sealed housing 12 in the form a stack of folded waves with insulated terminals 45. Like in the embodiment of Fig. 1, each module 13 is further provided with a controlled fluid connection to an inlet and outlet of electrolyte, the interspace 8 and to an electrolyte drain. The electrolyte is fed into the module 13 and drawn away through an upper conduit 54 and a lower conduit 55 connected to a pump 53, which can work as a reverse pump, i.e. with the possibility of interchanging the supply and discharge of the electrolyte from above or from below. Like in the previous described embodiment of Fig. 1, the circuit of the pump 53 may be completed with other devices, such as electrolyte reservoir, electrolyte cooling and/or heating equipment, electrolyte filter and regenerating unit, etc. Nevertheless, the accumulator of Fig 2 shows an additional element such as a valve 56 with the respective conduit to enable the connection of the electrolyte tank 5 to the circuit of the pump 53. In this embodiment the electrolyte tank 5 is simultaneously utilized as a reservoir of electrolyte. The function of the emergency system is the same as in described in relation to the embodiment of Fig. 1.

A method of preparing the module 13 according to Fig. 2 will be hereinafter described with reference to Fig. 3 showing a device for performing the method.

A material 22 of the positive electrode 2 is applied to both sides of a moving first strip of expanded metal or a perforated current collector in the press line 24 by rollers 72 in the atmosphere of anhydrous air at a temperature ranging from - 40 to -70 °C. The material 22 of the positive electrode 2 includes for example a powdered mixture of active compound such as oxides, mixed metal oxides and phosphates of lithium, dendrites of lithium, etc. and an electron conductive compound.

A material 32 of the negative electrode 3 is applied to both sides of a moving second strip of a current collector 31 having the same or similar structure in the press line 34 by rollers 73 also in the atmosphere of anhydrous air at a temperature from -40 to -70 °C. The material of the negative electrode 3 is for example a powdered mixture of conductive carbon and graphite, vanadium oxide, lithium dendrites, etc.

A material 42 of an inner separator 4 is simultaneously applied to both sides of a moving separator carrier tape 41 in a press line 44 by rollers 74 positioned between the lines 24 and 34 to produce the strap of the separator 4. The final step of producing the accumulator cell is completed by compressing the positive electrode 2, the negative electrode 3 and the separator 4 produced in the previous press lines 24, 34, 44 together with an external thin-walled insulating separator 6 by rollers 75.

The completed cell is then fed downstream into a heating zone 81 where the temperature of the cell is reduced to 18 to 26 ° C. In the heating zone 81 the cell is molded into the waves by a forming device 76. The waves are folded and gradually deposited and stacked on each other by reciprocal horizontal motion in the direction of arrows of the forming device 76 in the open housing 12. Any preservative residues of a mineral oil in the electrode material are removed by rinsing the cell in the housing module 13 by a solvent. The housing 12 is then assembled, inserted into the case shown in Fig. 2 and connected to the upper conduit 54 and the lower conduit 55 and the electrodes of the cell are wired to the accumulator poles and the entire housing 12 is closed.

### INDUSTRIAL APPLICABILITY

The invention is intended for use in all accumulators, which are exposed to fire or explosion hazard, especially lithium accumulators, which are more susceptible to overheating, or even explosion, and by which the increased demands for operation safety is required.

## Claims

1. A liquid electrolyte lithium accumulator made up of individual modules composed of mutually electrically and hydraulically connected cells wherein each cell comprises a positive electrode /2/ and a negative electrode /3/ separated by a separator /4/ and current collectors /26, 36/ connected to accumulator poles **characterized in that** each module /13/ is located in a housing /12/ stored in a common accumulator case /1/ with a defined interspace /8/ for an emergency medium between the housing /12/ and each module /13/ is further provided with a controlled fluid connection to an inlet and outlet of electrolyte, to the interspace /8/ and to an electrolyte drain.

2. The liquid electrolyte lithium accumulator of claim 1, wherein the module /13/ is provided with a controlled fluid connection to a source of pressurized inert gas via the interspace /8/.

3. The liquid electrolyte lithium accumulator of claim 1 or 2, wherein the module /13/ is connected to the interspace /8/ through an inlet valve /51/, to the electrolyte drain through an outlet valve /52/ and to the source of pressurized gas through an emergency shut-off valve /82/.

4. The liquid electrolyte lithium accumulator according to any of claims 1 to 3, wherein the inlet and the outlet of electrolyte are connected to an electrolyte pump /53/.

5. The liquid electrolyte lithium accumulator according to any of claims 1 to 4, wherein the emergency medium is selected form the group comprising mineral oil, anhydrous petroleum and inert gas or combination thereof.

6. The liquid electrolyte lithium accumulator according to any of claims of 1 to 5, wherein the housing /12/ with the module /13/ is composed of a vertical shell closed by an upper electrolyte distributor board /14/ and a bottom electrolyte distribution board /15/.

7. The liquid electrolyte lithium accumulator of claim 6, wherein the individual modules /13/ have a common electrolyte distributor board /14/ and a common bottom electrolyte distribution board /15/.

8. The liquid electrolyte lithium accumulator module according to any of claims 1 to 5 wherein the material /22/ of the positive electrode /2/ and the material /32/ of the negative electrode /3/ are each applied to both sides of a current collector /21, 31/ made of a perforated metal strip in the form of metal network, expanded metal, perforated or porous metallic foil and between the positive electrode /2/ and the negative electrode /3/ a strap of an inner separator /4/ is inserted to form an accumulator cell which cell is covered by an outer separator /6/ and as a module /13/ or a part thereof is placed in the housing /12/ in the form of folded waves, stacked on each other.

9. A method for producing a liquid electrolyte accumulator module according to claim 7 comprising steps of:
pressing on both sides of a first strip of the current collector a material of the positive electrode to produce the positive electrode and on both sides of a second strip of the current collector a material of the negative electrode to produce the negative electrode in the atmosphere of anhydrous air and at a temperature - 40 to -70 °C,
applying a separator material on both sides of a separator carrier tape to form an inner separator strap,
pressing the positive electrode on one side of the inner separator strap and the negative electrode on the other side of the inner separator strap to form a cell,
covering the cell by an external separator,
heating the cell to a temperature of 18 to 26 °C,
molding the cell to folded waves and gradually depositing the waves in stack in module housing.
